# EUROPÄISCHE PATENTSCHRIFT

(11) **EP 1 414 899 B1**
(45) Veröffentlichungstag und Bekanntmachung des Hinweises auf die Patenterteilung: **19.03.2008**
(21) Anmeldenummer: 02751154.2
(22) Anmeldetag: 22.07.2002
(51) Int. Cl.: C08L 55/02, C08L 25/12, C08F 279/04

(54) **POLYMERZUSAMMENSETZUNGEN MIT VERBESSERTER EIGENSCHAFTSKONSTANZ**
POLYMER COMPOSITIONS HAVING IMPROVED PROPERTY CONSTANCY
COMPOSITIONS DE POLYMERES A CONSTANCE DE PROPRIETES AMELIOREE

(30) Priorität: 02.08.2001 DE 10137782
(43) Veröffentlichungstag der Anmeldung: 06.05.2004
(73) Patentinhaber: LANXESS Deutschland GmbH, 51369 Leverkusen (DE)
(72) Erfinder: EICHENAUER, Herbert, 41539 Dormagen (DE); BUCHHOLZ, Vera, 50823 Köln (DE); WENZ, Eckhard, 50679 Köln (DE)
(86) Internationale Anmeldenummer: PCT/EP2002/008135
(87) Internationale Veröffentlichungsnummer: WO 2003/014222

(56) Entgegenhaltungen:
- EP-A- 0 007 810
- EP-A- 0 678 531
- DE-A- 19 831 734

## Beschreibung

ABS-Formmassen bzw. Formmassen vom ABS-Typ werden schon seit vielen Jahren in großen Mengen als thermoplastische Harze für die Herstellung von Formteilen aller Art eingesetzt. Dabei kann das Eigenschaftsspektrum dieser Harze in weiten Bereichen variiert werden.

Als besonders wichtige Eigenschaften von ABS-Formmassen seien Zähigkeit (Schlagzähigkeit, Kerbschlagzähigkeit), E-Modul, Verarbeitbarkeit (MVR), Wärmeformbeständigkeit, Oberflächenglanz genannt, wobei es in Abhängigkeit vom Einsatzgebiet im allgemeinen auf definierte Eigenschaftskombinationen ankommt.

Ein besonders wichtiges Merkmal für den Verarbeiter von ABS-Formmassen stellt, insbesondere bei Nutzung vollautomatischer Fertigungsanlagen, die Konstanz von Eigenschaften oder Eigenschaftskombinationen der zu verarbeitenden Formmassen dar.

Zwar lassen sich durch Nutzung moderner Verfahren bei der ABS-Herstellung (z.B. Computersteuerung von Polymerisation und Compoundierung) Produkte mit relativ engen Toleranzgrenzen herstellen, trotzdem ist für spezielle Anwendungen eine nur über die Produktzusammensetzung bzw. den Produktaufbau erreichbare noch höhere Eigenschaftskonstanz notwendig.

Es bestand daher die Aufgabe, thermoplastische Formmassen vom ABS-Typ herzustellen, die ein sehr konstantes Eigenschaftsprofil aufweisen. Insbesondere sollte dies für Produkte mit einem sehr hohen Oberflächenglanz erreicht werden.

Die erfindungsgemäße Aufgabe wird gelöst durch den Einsatz von Kombinationen zweier Pfropfkautschukpolymerisate, bei deren Herstellung unter Verwendung von Butadienpolymerisat-Saatlatexteilchen mit definierten Teilchendurchmessern durch Saatpolymerisation erhaltener Kautschuk mit definiertem Teilchendurchmesser eingesetzt wird.

Gegenstand der Erfindung sind Polymerzusammensetzungen enthaltend
I) mindestens ein Pfropfkautschukpolymerisat erhalten durch Emulsionspolymerisation von Styrol und Acrylnitril im Gewichtsverhältnis 95:5 bis 50:50, wobei Styrol und/oder Acrylnitril ganz oder teilweise ersetzt werden kann durch α-Methylstyrol, Methylmethacrylat oder N-Phenylmaleinimid oder Mischungen hieraus, in Gegenwart mindestens eines Butadienpolymerisatlatex (A) mit einem mittleren Teilchendurchmesser d₅₀ von 80 bis 220 nm, vorzugsweise von 90 bis 210 nm und besonders bevorzugt von 100 bis 200 nm,
II) mindestens ein Pfropfkautschukpolymerisat erhalten durch Emulsionspolymerisation von Styrol und Acrylnitril im Gewichtsverhältnis 95:5 bis 50:50, wobei Styrol und/oder Acrylnitril ganz oder teilweise ersetzt werden kann durch α-Methylstyrol, Methylmethacrylat oder N-Phenylmaleinimid oder Mischungen hieraus, in Gegenwart mindestens eines Butadienpolymerisatlatex (B) mit einem mittleren Teilchendurchmesser d₅₀ von 350 bis 650 nm, vorzugsweise von 360 bis 600 nm, besonders bevorzugt von 380 bis 550 nm und ganz besonders bevorzugt von 390 bis 500 nm,
III) mindestens ein kautschukfreies Copolymerisat aus Styrol und Acrylnitril im Gewichtsverhältnis 95:5 bis 50:50, wobei Styrol und/oder Acrylnitril ganz oder teilweise durch α-Methylstyrol, Methylmethacrylat oder N-Phenylmaleinimid oder Mischungen hieraus ersetzt werden kann,
**dadurch gekennzeichnet, dass** der Butadienpolymerisatlatex (A) erhalten wurde durch Saatpolymerisation unter Verwendung eines Butadienpolymerisat-Saatlatex mit einem mittleren Teilchendurchmesser von 10 bis 100 nm, vorzugsweise von 20 bis 90 nm und besonders bevorzugt von 30 bis 80 nm und der Butadienpolymerisatlatex (B) erhalten wurde durch Agglomeration unter Verwendung von Butadienpolymerisatlatex (A) als Ausgangslatex.

Gegenstand der vorliegenden Erfindung ist weiterhin ein Verfahren zur Herstellung der erfindungsgemäßen Polymerzusammensetzungen, wobei der Butadienpolymerisatlatex (A) erhalten wird durch Saatpolymerisation unter Verwendung eines Butadienpolymerisat-Saatlatex mit einem mittleren Teilchendurchmesser von 10 bis 100 nm und der Butadienpolymerisatlatex (B) erhalten wird durch Agglomeration unter Verwendung von Butadienpolymerisatlatex (A) als Ausgangslatex.

Im allgemeinen können die erfindungsgemäßen Polymerzusammensetzungen die Pfropfkautschukkomponenten (I) + (II) in Anteilen von 1 bis 60 Gew.-Teilen, vorzugsweise 5 bis 50 Gew.-Teilen, und die kautschukfreie Harzkomponente (III) in Anteilen von 40 bis 99 Gew.-Teilen, vorzugsweise 50 bis 95 Gew.-Teilen, enthalten.

Das Gew.-Verhältnis (I):(II) kann in weiten Grenzen variiert werden; üblicherweise beträgt es 90:10 bis 10:90, vorzugsweise 80:20 bis 30:70 und besonders bevorzugt 70:30 bis 40:60.

Außer den genannten Polymerkomponenten können die erfindungsgemäßen Polymerzusammensetzungen weitere kautschukfreie nicht aus Vinylmonomeren aufgebaute Thermoplastharze enthalten, wobei man diese Thermoplastharze in Mengen bis zu 1000 Gew.-Teilen, vorzugsweise bis zu 700 Gew.-Teilen und besonders bevorzugt bis zu 500 Gew.-Teilen (jeweils bezogen auf 100 Gew.-Teile I + II + III) verwendet.

Der Butadienpolymerisatlatex (A) wird durch Emulsionspolymerisation von Butadien nach der sogenannten Saatpolymerisationstechnik hergestellt, bei der zunächst ein feinteiliges Butadienpolymerisat als Saatlatex hergestellt und dann durch Weiterumsatz mit Butadien enthaltenden Monomeren zu größeren Teilchen weiterpolymerisiert wird (siehe z.B. in Houben-Weyl, Methoden der Organischen Chemie, Makromolekulare Stoffe Teil 1, S. 339 (1961), Thieme Verlag Stuttgart). Dabei wird vorzugsweise unter Verwendung des Saat-Batch-Verfahrens oder Verwendung des Saat-Zulauf-Verfahrens gearbeitet.

Als Comonomere können bis zu 50 Gew.-% (bezogen auf die gesamte zur Butadienpolymerisatherstellung eingesetzte Monomermenge) eines oder mehrerer mit Butadien copolymerisierbarer Monomerer eingesetzt werden.

Beispiele für solche Monomere sind Isopren, Chloropren, Acrylnitril, Styrol, α-Methylstyrol, C₁-C₄-Alkylstyrole, C₁-C₈-Alkylacrylate, C₁-C₈-Alkylmethacrylate, Alkylenglykoldiacrylate, Alkylenglykoldimethacrylate, Divinylbenzol; vorzugsweise wird Butadien alleine oder in Abmischung mit bis zu 20 Gew.-%, vorzugsweise mit bis zu 10 Gew.-% Styrol und/oder Acrylnitril eingesetzt.

Als Saatlatexpolymere werden vorzugsweise Butadienpolymerisate wie z.B. Polybutadien, Butadien / Styrol - Copolymerisate, Butadien / Acrylnitril - Copolymerisate oder Polymerisate aus den oben genannten Monomeren eingesetzt.

Bevorzugte Saatlatexpolymere sind Polybutadienlatices.

Dabei wird bei der Herstellung des Butadienpolymerisatlatex (A) ein Saatlatex mit einem mittleren Teilchendurchmesser d₅₀ von 10 bis 100 nm, vorzugsweise 20 bis 90 nm und besonders bevorzugt 30 bis 80 nm eingesetzt.

Bei der Herstellung des Butadienpolymerisatlatex (B) wird der Butadienpolymerisatlatex (A) als Ausgangslatex eingesetzt.

Der Saatlatex zur Herstellung des Butadienpolymerisat (A) besitzt einen Gelgehalt von 10 bis 95 Gew.-%, vorzugsweise von 20 bis 90 Gew.-% und besonders bevorzugt von 30 bis 85 Gew.-%.

Der Butadienpolymerisatlatex (A) besitzt einen mittleren Teilchendurchmesser d₅₀ von 80 bis 220 nm, vorzugsweise von 90 bis 210 nm und besonders bevorzugt von 100 bis 200 nm.

Der Gelgehalt von (A) beträgt 30 bis 98 Gew.-%, vorzugsweise 40 bis 95 Gew.-% und besonders bevorzugt 50 bis 92 Gew.-%.

Der Butadienpolymerisatlatex (B) besitzt einen mittleren Teilchendurchmesser d₅₀ von 350 bis 650 nm, vorzugsweise von 360 bis 600 nm und besonders bevorzugt von 380 bis 550 nm und ganz besonders bevorzugt von 390 bis 500 nm.

Der Gelgehalt von (B) beträgt 30 bis 98 Gew.-%, vorzugsweise 40 bis 95 Gew.-% und besonders bevorzugt 50 bis 92 Gew.-%.

Der Butadienpolymerisatlatex (B) wird durch Agglomeration aus dem durch Saatpolymerisation erhaltenen Butadienpolymerisatlatex (A) oder Mischungen verschiedener Butadienpolymerisatlatices (A) hergestellt. Dabei können die üblichen, zur Durchführung der Agglomeration bekannten Verfahren verwendet werden.

Beispielsweise seien genannt die Agglomeration durch Einwirkung von Chemikalien wie z.B. Acetanhydrid (siehe z.B. US-A 3,558,541, EP-A 7810 und dort zitierte Literatur) oder Acrylat-haltigen Mischpolymerisat-Dispersionen (siehe DE-A 17 20 058), durch Einwirkung mechanischer Kräfte unter Druck in einer Düse (siehe z.B. DE-A 12 33 131) oder durch starkes Abkühlen des Latex (siehe z.B. GB-A 758 622).

Bevorzugtes Verfahren zur Herstellung des Butadienpolymerisatlatex (B) ist die chemische Agglomeration unter Verwendung von Acetanhydrid.

Die Bestimmung des mittleren Teilchendurchmessers d₅₀ kann durch Ultrazentrifugenmessung ermittelt werden (vgl. W. Scholtan, H. Lange: Kolloid Z. u. Z. Polymere 250, S. 782 bis 796 (1972)), die angegebenen Werte für den Gelgehalt beziehen sich auf die Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart).

Die Gelgehalte des Butadienpolymerisatlatex (A) (und somit auch des Butadienpolymerisatlatex (B)) sowie des Butadienpolymerisat-Saatlatex zur Herstellung von Butadienpolymerisatlatex (A) können in prinzipiell bekannter Weise durch Anwendung geeigneter Reaktionsbedingungen eingestellt werden (z.B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z.B. niedrige Reaktionstemperatur und/oder Abbruch der Polymerisationsreaktion vor Eintreten einer zu starken Vernetzung sowie gegebenenfalls Zusatz von Molekulargewichtsreglern wie beispielsweise n-Dodecylmercaptan oder t-Dodecylmercaptan zur Erzielung eines niedrigen Gelgehaltes). Als Emulgator können übliche anionische Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren verwendet werden. Auch Emulgatoren mit Carboxylgruppen (z.B. Salze von C₁₀-C₁₈-Fettsäuren, disproportionierte Abietinsäure, Emulgatoren gemäß DE-A 36 39 904 und DE-A 39 13 509) können prinzipiell eingesetzt werden.

Die Herstellung der Pfropfkautschukpolymerisate (I) und (II) kann beliebig durch separate Pfropfung der Butadienpolymerisatlatices (A) und (B) in getrennten Reaktionen oder durch gemeinsame Pfropfung einer Mischung der Butadienpolymerisatlatices (A) und (B) während einer Reaktion durchgeführt werden, bevorzugt ist die separate Pfropfung der Butadienpolymerisatlatices (A) und (B) in getrennten Reaktionen.

Dabei können die Pfropfpolymerisation(en) nach beliebigen Verfahren durchgeführt werden, vorzugsweise wird bzw. werden sie so durchgeführt, dass das Monomergemisch kontinuierlich zum Butadienpolymerisatlatex (A) bzw. zum Butadienpolymerisatlatex (B) bzw. zu einem Gemisch der Butadienpolymerisatlatices (A) und (B) gegeben und polymerisiert wird.

Dabei werden bevorzugt spezielle Monomer-/Kautschuk-Verhältnisse eingehalten und die Monomeren in einer bekannten Weise zum Kautschuk gegeben:

Zur Erzeugung der erfindungsgemäßen Komponenten (I) und (II) werden vorzugsweise 15 bis 60 Gew.-Teile, besonders bevorzugt 20 bis 50 Gew.-Teile, eines Gemisches aus Styrol und Acrylnitril, das gegebenenfalls bis zu 50 Gew.-% (bezogen auf Gesamtmenge der in der Pfropfpolymerisation eingesetzten Monomeren) eines oder mehrerer Comonomerer enthalten kann, in Gegenwart von vorzugsweise 40 bis 85 Gew.-Teilen, besonders bevorzugt 50 bis 80 Gew.-Teilen (jeweils bezogen auf Feststoff) des Butadienpolymerisatlatex (A) bzw. des Butadienpolymerisatlatex (B) bzw. eines Gemisches der Butadienpolymerisatlatices (A) und (B) polymerisiert.

Vorzugsweise unterscheiden sich die Kautschukgehalte der Pfropfkautschukpolymerisate (I) und (II) derart, dass (II) einen um ≥ 2 Gew.-%, vorzugsweise ≥ 5 Gew.-%, höheren Kautschukgehalt als (I) aufweist.

Die bei der Pfropfpolymerisation eingesetzten Monomeren sind vorzugsweise Mischungen aus Styrol und Acrylnitril im Gew.-Verhältnis 95:5 bis 50:50, besonders bevorzugt im Gew.-Verhältnis 80:20 bis 65:35, wobei Styrol und/oder Acrylnitril ganz oder teilweise durch copolymerisierbare Monomere, vorzugsweise durch α-Methylstyrol, Methylmethacrylat oder N-Phenylmaleinimid ersetzt werden können. Prinzipiell können zusätzlich beliebige weitere copolymerisierbare Vinylmonomere in Mengen bis ca. 10 Gew.-% (bezogen auf Gesamtmenge der Monomeren) mitverwendet werden.

Zusätzlich können bei der Pfropfpolymerisation Molekulargewichtsregler eingesetzt werden, vorzugsweise in Mengen von 0,01 bis 2 Gew.-%, besonders bevorzugt in Mengen von 0,05 bis 1 Gew.-% (jeweils bezogen auf Gesamtmonomermenge in der Pfropfpolymerisationstufe).

Geeignete Molekulargewichtsregler sind beispielsweise Alkylmercaptane wie n-Dodecylmercaptan, t-Dodecylmercaptan; dimeres α-Methylstyrol; Terpinolen.

Als Initiatoren kommen anorganische und organische Peroxide, z.B. H₂O₂, Di-tert.-Butylperoxid, Cumolhydroperoxid, Dicyclohexylpercarbonat, tert.-Butylhydroperoxid, p-Menthanhydroperoxid, Azoinitiatoren wie Azobisisobutyronitril, anorganische Persalze wie Ammonium-, Natrium- oder Kaliumpersulfat, Kaliumperphosphat, Natriumperborat sowie Redox-Systeme in Betracht. Redox-Systeme bestehen in der Regel aus einem organischen Oxidationsmittel und einem Reduktionsmittel, wobei im Reaktionsmedium zusätzlich Schwermetallionen vorhanden sein können (siehe Houben-Weyl, Methoden der Organischen Chemie, Band 14/1, S. 263 bis 297).

Die Polymerisationstemperatur ist im allgemeinen 25°C bis 160°C, vorzugsweise 40°C bis 90°C. Geeignete Emulgatoren sind oben angegeben.

Dabei kann nach üblicher Temperaturführung, z.B. isotherm, gearbeitet werden; vorzugsweise wird die Pfropfpolymerisation jedoch so durchgeführt, dass der Temperaturunterschied zwischen Beginn und Ende der Reaktion mindestens 10°C, vorzugsweise mindestens 15°C und besonders bevorzugt mindestens 20°C beträgt.

Zur Erzeugung der erfindungsgemäßen Komponenten I) und II) kann die Pfropfpolymerisation vorzugsweise durch Monomerenzulauf derart durchgeführt werden, dass innerhalb der ersten Hälfte der Gesamtmonomerenzudosierzeit 55 bis 90 Gew.-%, vorzugsweise 60 bis 80 Gew.-% und besonders bevorzugt 65 bis 75 Gew.-% der gesamten bei der Pfropfpolymerisation einzusetzenden Monomeren zudosiert werden; der verbleibende Monomeranteil wird innerhalb der zweiten Hälfte der Gesamtmonomerzudosierzeit zudosiert.

Als kautschukfreie Copolymerisate III) werden vorzugsweise Copolymerisate des Styrols und Acrylnitrils im Gewichtsverhältnis 95:5 bis 50:50 verwendet, wobei Styrol und/oder Acrylnitril ganz oder teilweise durch α-Methylstyrol, Methylmethacrylat oder N-Phenylmaleinimid ersetzt werden kann.

Besonders bevorzugt sind Copolymerisate III) mit Anteilen an eingebauten Acrylnitril-Einheiten <30 Gew.-%.

Diese Copolymerisate besitzen vorzugsweise mittlere Molekulargewichte M̅_{w} von 20 000 bis 200 000 bzw. Grenzviskositäten [η] von 20 bis 110 ml/g (gemessen in Dimethylformamid bei 25°C).

Einzelheiten zur Herstellung dieser Harze sind beispielsweise in der DE-A 2 420 358 und der DE-A 2 724 360 beschrieben. Durch Masse- bzw. Lösungspolymerisation hergestellte Vinylharze haben sich besonders bewährt. Die Copolymerisate können allein oder in beliebiger Mischung zugesetzt werden.

Außer aus Vinylmonomeren aufgebauten Thermoplastharzen ist auch die Verwendung von Polykondensaten z.B. aromatischen Polycarbonaten, aromatischen Polyestercarbonaten, Polyestern, Polyamiden als kautschukfreies Copolymerisat in den erfindungsgemäßen Formmassen möglich.

Geeignete thermoplastische Polycarbonate und Polyestercarbonate sind bekannt (vgl. z.B. DE-A 1 495 626, DE-A 2 232 877, DE-A 2 703 376, DE-A 2 714 544, DE-A 3 000 610, DE-A 3 832 396, DE-A 3 077 934), z.B. herstellbar durch Umsetzung von Diphenolen der Formeln (IV) und (V) 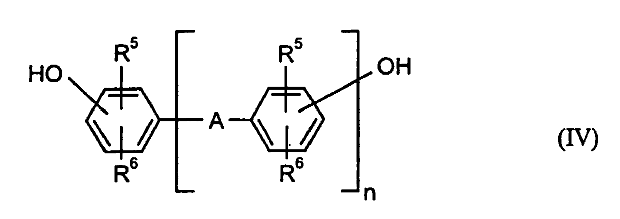 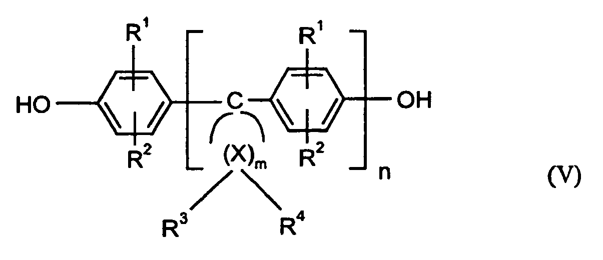 worin
- A: eine Einfachbindung, C₁-C₅-Alkylen, C₂-C₅-Alkyliden, C₅-C₆-Cycloalkyliden, -O-, -S-, -SO-, -SO₂- oder -CO- ist,
- R⁵ und R⁶: unabhängig voneinander für Wasserstoff, Methyl oder Halogen, insbesondere für Wasserstoff, Methyl, Chlor oder Brom stehen,
- R¹ und R²: unabhängig voneinander Wasserstoff, Halogen bevorzugt Chlor oder Brom, C₁-C₈-Alkyl, bevorzugt Methyl, Ethyl, C₅-C₆-Cycloalkyl, bevorzugt Cyclohexyl, C₆-C₁₀-Aryl, bevorzugt Phenyl, oder C₇-C₁₂-Aralkyl, bevorzugt Phenyl-C₁-C₄-alkyl, insbesondere Benzyl, bedeuten,
- m: eine ganze Zahl von 4 bis 7, bevorzugt 4 oder 5 ist,
- n: 0 oder 1 ist,
- R³ und R⁴: für jedes X individuell wählbar sind und unabhängig voneinander Wasserstoff oder C₁-C₆-Alkyl bedeuten und
- X: Kohlenstoff bedeutet,
mit Kohlensäurehalogeniden, vorzugsweise Phosgen, und/oder mit aromatischen Dicarbonsäuredihalogeniden, vorzugsweise Benzoldicarbonsäuredihalogeniden, durch Phasengrenzflächen-Polykondensation oder mit Phosgen durch Polykondensation in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (IV) und (V) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethyleyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-trimethylcyclopentan.

Bevorzugte Diphenole der Formel (IV) sind 2,2-Bis-(4-hydroxyphenyl)-propan und 1,1-Bis-(4-hydroxyphenyl)-cyclohexan, bevorzugtes Phenol der Formel (V) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-A 2 842 005, Monoalkylphenole, Dialkylphenole mit insgesamt 8 bis 20 C-Atomen in den Alkylsubstituenten gemäß DE-A 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (IV) und (V).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte (M̅_{w}, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, d.h., Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2,-Bis-4-hydroxycyclohexyl)-propan, 2,4-Dihydroxy-1,1,3,3-tetramethylcyclobutan, 2,2-Bis-(3-B-hydroxyethoxyphenyl)-propan und 2,2-Bis-(4-hydroxypropoxyphenyl)-propan (DE-A 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in der DE-A 1 900 270 und der US-A 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexyhnethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diamino-dicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus
70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und
gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Die Herstellung der erfindungsgemäßen Formmassen erfolgt durch Vermischen der Komponenten I), II) und III) und gegebenenfalls weiteren Polymeren und üblichen Additiven auf üblichen Mischaggregaten (vorzugsweise auf Mehrwalzenstühlen, Mischextrudem oder Innenknetem).

Gegenstand der Erfindung ist daher weiterhin ein Verfahren zur Herstellung der erfindungsgemäßen Formmassen, wobei man die Komponenten I), II) und III) und gegebenenfalls weitere Polymere und übliche Additive vermischt und bei erhöhter Temperatur, im allgemeinen bei Temperaturen von 150°C bis 300°C, compoundiert und extrudiert.

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern, etc.), Farbmittel.

Die Endverformung kann auf handelsüblichen Verarbeitungsaggregaten vorgenommen werden und umfasst z.B. Spritzgießverarbeitung, Plattenextrusion mit gegebenenfalls anschließender Warmverformung, Kaltverformung, Extrusion von Rohren und Profilen, Kalander-Verarbeitung.

In den folgenden Beispielen sind die angegebenen Teile immer Gewichtsteile und die angegebenen % immer Gew.-%, wenn nicht anders angegeben.

### Beispiele:

### Komponenten

### ABS-Pfropfpolymerisat 1

50 Gew.-Teile (gerechnet als Feststoff) eines unter Verwendung eines Polybutadiensaatlatex mit einem mittleren Teilchendurchmesser d₅₀ von 48 nm durch radikalische Saatpolymerisation hergestellten anionisch emulgierten Polybutadienlatex mit einem mittleren Teilchendurchmesser d₅₀ von 119 nm und einem Gelgehalt von 69 Gew.-% werden mit Wasser auf einen Feststoffgehalt von ca. 20 Gew.-% gebracht, wonach auf 59°C erwärmt und mit 0,5 Gew.-Teilen Kaliumperoxodisulfat (gelöst in Wasser) versetzt wird.

Danach werden 50 Gew.-Teile eines Gemisches aus 73 Gew.-% Styrol, 27 Gew.-% Acrylnitril und 0,15 Gew.-Teile tert.-Dodecylmercaptan innerhalb 6 Stunden gleichmäßig zudosiert, parallel dazu wird 1 Gew.-Teil (gerechnet als Festsubstanz) des Natriumsalzes eines Harzsäuregemisches (Dresinate^{®} 731, Abieta Chemie GmbH, Gersthofen, Deutschland, gelöst in alkalisch eingestelltem Wasser) über einen Zeitraum von 6 Stunden zudosiert. Im Laufe der 6 Stunden wird die Reaktionstemperatur von 59°C auf 80°C angehoben. Nach einer zweistündigen Nachreaktionszeit bei 80°C wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende feuchte Pulver bei 70°C getrocknet.

### ABS-Pfropfpolymerisat 2

60 Gew.-Teile (gerechnet als Feststoff) eines unter Verwendung des Polybutadienausgangslatex aus Beispiel 1 mit einem mittleren Teilchendurchmesser d₅₀ von 119 nm und einem Gelgehalt von 69 Gew.-% durch Agglomeration unter Verwendung von Essigsäureanhydrid gemäß EP-A 7810 (Beispiel Latex B) hergestellten Polybutadienlatex mit einem mittleren Teilchendurchmesser d₅₀ von 434 nm und einem Gelgehalt von 69 Gew.-% werden mit Wasser auf einen Feststoffgehalt von ca. 20 Gew.-% gebracht, wonach auf 59°C erwärmt und mit 0,5 Gew.-Teilen Kaliumperoxodisulfat (gelöst in Wasser) versetzt wird.

Danach werden 40 Gew.-Teile eines Gemisches aus 73 Gew.-% Styrol, 27 Gew.-% Acrylnitril und 0,12 Gew.-Teile tert.-Dodecylmercaptan innerhalb 6 Stunden gleichmäßig zudosiert, parallel dazu wird 1 Gew.-Teil (gerechnet als Festsubstanz) des Natriumsalzes eines Harzsäuregemisches (Dresinate^{®} 731, Abieta Chemie GmbH, Gersthofen, Deutschland, gelöst in alkalisch eingestelltem Wasser) über einen Zeitraum von 6 Stunden zudosiert. Im Laufe der 6 Stunden wird die Reaktionstemperatur von 59°C auf 80°C angehoben. Nach einer zweistündigen Nachreaktionszeit bei 80°C wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende feuchte Pulver bei 70°C getrocknet.

### ABS-Pfropfpolymerisat 3

Die Vorschrift "ABS-Pfropfpolymerisat 2" wird wiederholt, wobei ein aus dem Ausgangslatex aus Beispiel 1 mit d₅₀ =119 nm und einem Gelgehalt von 69 Gew.-% durch Agglomeration unter Verwendung von Essigsäureanhydrid hergestellter Polybutadienlatex mit einem mittleren Teilchendurchmesser d₅₀ von 464 nm und einem Gelgehalt von 69 Gew.-% als Pfropfgrundlage eingesetzt wird.

### ABS-Pfropfpolymerisat 4

Die Vorschrift "ABS-Pfropfpolymerisat 2" wird wiederholt, wobei ein aus dem Ausgangslatex aus Beispiel 1 mit d₅₀ = 119 nm und einem Gelgehalt von 69 Gew.-% durch Agglomeration unter Verwendung von Essigsäureanhydrid hergestellter Polybutadienlatex mit einem mittleren Teilchendurchmesser d₅₀ von 531 nm und einem Gelgehalt von 69 Gew.-% als Pfropfgrundlage eingesetzt wird.

### ABS-Pfropfpolymerisat 5 (Vergleich)

Die Vorschrift "ABS-Pfropfpolymerisat 1" wird wiederholt, wobei ein ohne Verwendung eines Polybutadiensaatlatex hergestellter Polybutadienlatex mit einem mittleren Teilchendurchmesser d₅₀ von 140 nm und einem Gelgehalt von 90 Gew.-% als Pfropfgrundlage eingesetzt wird.

### ABS-Pfropfpolymerisat 6 (Vergleich)

Die Vorschrift "ABS-Pfropfpolymerisat 2" wird wiederholt, wobei ein ohne Verwendung eines Polybutadiensaatlatex hergestellter Polybutadienlatex mit einem mittleren Teilchendurchmesser d₅₀ von 447 nm und einem Gelgehalt von 72 Gew.-% als Pfropfgrundlage eingesetzt wird.

### ABS-Pfropfpolymerisat 7 (Vergleich)

Die Vorschrift "ABS-Pfropfpolymerisat 2" wird wiederholt, wobei ein ohne Verwendung eines Polybutadiensaatlatex hergestellter Polybutadienlatex mit einem mittleren Teilchendurchmesser d₅₀ von 435 nm und einem Gelgehalt von 80 Gew.-% als Pfropfgrundlage eingesetzt wird.

### ABS-Pfropfpolymerisat 8 (Vergleich)

Die Vorschrift "ABS-Pfropfpolymerisat 2" wird wiederholt, wobei ein ohne Verwendung eines Polybutadiensaatlatex hergestellter Polybutadienlatex mit einem mittleren Teilchendurchmesser d₅₀ von 429 nm und einem Gelgehalt von 69 Gew.-% als Pfropfgrundlage eingesetzt wird.

### ABS-Pfropfpolymerisat 9

Die Vorschrift "ABS-Pfropfpolymerisat 1" wird wiederholt, wobei ein Polybutadienlatex mit einem mittleren Teilchendurchmesser d₅₀ von 40 nm und ein darauf basierender Polybutadienlatex mit einem mittleren Teilchendurchmesser d₅₀ von 123 nm und einem Gelgehalt von 82 Gew.-% eingesetzt wird.

### ABS-Pfropfpolymerisat 10

Die Vorschrift "ABS-Pfropfpolymerisat 2" wird wiederholt, wobei der Polybutadienlatex aus Beispiel 9 mit einem mittleren Teilchendurchmesser d₅₀ von 123 nm und einem Gelgehalt von 82 Gew.-% als Ausgangslatex für die Agglomeration eingesetzt wird. Der resultierende zur Pfropfpolymerherstellung eingesetzte Polybutadienlatex besitzt einen mittleren Teilchendurchmesser d₅₀ von 458 nm und einen Gelgehalt von 82 Gew.-%.

### ABS-Pfropfpolymerisat 11

Die Vorschrift "ABS-Pfropfpolymerisat 10" wird wiederholt, wobei ein unter Verwendung des Polybutadienlatex aus Beispiel 9 als Ausgangslatex (d₅₀ = 123 nm) durch Agglomeration gemäß Vorschrift "ABS-Propfpolymerisat 2" hergestellter Polybutadienlatex mit einem mittleren Teilchendurchmesser d₅₀ von 495 nm und einem Gelgehalt von 82 Gew.-% als Pfropfgrundlage eingesetzt wird.

### ABS-Pfropfpolymerisat 12

Die Vorschrift "ABS-Pfropfpolymerisat 10" wird wiederholt, wobei ein unter Verwendung eines Polybutadienlatex mit einem mittleren Teilchendurchmesser d₅₀ von 126 nm (hergestellt durch Saatpolymerisation unter Verwendung eines Polybutadienlatex mit einem mittleren Teilchendurchmesser d₅₀ von 40 nm) und einem Gelgehalt von 78 Gew.-% durch Agglomeration gemäß Vorschrift "ABS-Propfpolymerisat 2" hergestellter Polybutadienlatex mit einem mittleren Teilchendurchmesser d₅₀ von 432 nm und einem Gelgehalt von 78 Gew.-% als Pfropfgrundlage eingesetzt wird.

### ABS-Pfropfpolymerisat 13

Die Vorschrift "ABS-Pfropfpolymerisat 10" wird wiederholt, wobei ein unter Verwendung eines Polybutadienlatex mit einem mittleren Teilchendurchmesser d₅₀ von 126 nm (hergestellt durch Saatpolymerisation unter Verwendung eines Polybutadienlatex mit einem mittleren Teilchendurchmesser d₅₀ von 40 nm) und einem Gelgehalt von 78 Gew.-% durch Agglomeration gemäß Vorschrift "ABS-Propfpolymerisat 2" hergestellter Polybutadienlatex mit einem mittleren Teilchendurchmesser dso von 443 nm und einem Gelgehalt von 78 Gew.-% als Pfropfgrundlage eingesetzt wird.

### Harzkomponente

Statistisches Styrol/Acrylnitril-Copolymerisat (Styrol : Acrylnitril-Gewichtsverhältnis 72 : 28) mit einem M̅w von ca. 85.000 und einer Uneinheitlichkeit u = M̅w/M̅n - 1≤2 erhalten durch radikalische Lösungspolymerisation.

### Formmassen

Die oben beschriebenen Polymerkomponenten werden in den in Tabelle 1 angegebenen Anteilen, 2 Gew.-Teilen Ethylendiaminbisstearylamid und 0,1 Gew.-Teilen eines Silikonöls in einem Innenkneter vermischt und nach Granulierung zu Prüfstäben und zu einer ebenen Platte (zur Beurteilung der Oberfläche) verarbeitet.

Folgende Daten werden ermittelt:
Kerbschlagzähigkeit bei Raumtemperatur (aₖ^{RT}) und bei -40°C (aₖ^{-40°C}) nach ISO 180/1A (Einheit: kJ/m²), Kugeldruckhärte (Hc) nach DIN 53 456 (Einheit: N/mm²), thermoplastische Fließfähigkeit (MVI) nach DIN 53 735 U (Einheit: cm³/10 min) und Oberflächenglanz nach DIN 67 530 bei einem Reflektionswinkel von 20° (Reflektometerwert)

Aus den Beispielen (Prüfdaten siehe Tabelle 2) ist ersichtlich, dass die erfindungsgemäßen Produkte sehr enge Schwankungsbreiten der wichtigsten Eigenschaften (insbesondere Zähigkeit und Verarbeitbarkeit) aufweisen. Außerdem zeigen die erfindungsgemäßen Formmassen sehr hohe Glanzwerte (ebenfalls mit geringer Schwankungsbreite).

Zwar zeigen die Vergleichsprodukte ähnliche Absolutwerte für die geprüften Eigenschaften, die Schwankungsbreiten sind jedoch deutlich größer.

**Tabelle 1: Zusammensetzungen der Formmassen**

| | ABS-Pfropfpolymerisat | | | | | | | | | | | | | Harzkomponente (Gew.-Teile) |
|---|---|---|---|---|---|---|---|---|---|---|---|---|---|---|
| Beispiel | 1 | 2 | 3 | 4 | 5 | 6 | 7 | 8 | 9 | 10 | 11 | 12 | 13 | |
| | (Gew.-Teile) | (Gew.-Teile) | (Gew.-Teile) | (Gew.-Teile) | (Gew.-Teile) | (Gew.-Teile) | (Gew.-Teile) | (Gew.-Teile) | (Gew.-Teile) | (Gew.-Teile) | (Gew.-Teile) | (Gew.-Teile) | (Gew.-Teile) | |
| 1 | 15 | 15 | -- | -- | -- | -- | -- | -- | -- | -- | -- | -- | -- | 70 |
| 2 | 15 | -- | 15 | -- | -- | -- | -- | -- | -- | -- | -- | -- | -- | 70 |
| 3 | 15 | -- | -- | 15 | -- | -- | -- | -- | -- | -- | -- | -- | -- | 70 |
| 4 (Vergleich) | -- | -- | -- | -- | 15 | 15 | -- | -- | -- | -- | -- | -- | -- | 70 |
| 5 (Vergleich) | -- | -- | -- | -- | 15 | -- | 15 | -- | -- | -- | -- | -- | -- | 70 |
| 6 (Vergleich) | -- | -- | -- | -- | 15 | -- | -- | 15 | -- | -- | -- | -- | -- | 70 |
| 7 | -- | -- | -- | -- | -- | -- | -- | -- | 15 | 15 | -- | -- | -- | 70 |
| 8 | -- | -- | -- | -- | -- | -- | -- | -- | 15 | -- | 15 | -- | -- | 70 |
| 9 | -- | -- | -- | -- | -- | -- | -- | -- | 15 | -- | -- | 15 | -- | 70 |
| 10 | -- | -- | -- | -- | -- | -- | -- | -- | 15 | -- | -- | -- | 15 | 70 |

**Tabelle 2: Prüfdaten der Formmassen**

| **Beispiel** | **aₖ^{RT} (kJ/m²)** | **aₖ^{-40°C} (kJ/m²)** | **Hc (N/mm²)** | **MVI (cm³/10min)** | **Glanzgrad** |
|---|---|---|---|---|---|
| 1 | 16.9 | 8.6 | 108 | 41.4 | 94 |
| 2 | 17.6 | 8.5 | 106 | 41.4 | 93 |
| 3 | 17.6 | 8.6 | 107 | 40.8 | 94 |
| 4 (Vergleich) | 19.9 | 9.1 | 103 | 36.6 | 91 |
| 5 (Vergleich) | 18.6 | 8.0 | 104 | 34.2 | 90 |
| 6 (Vergleich) | 17.1 | 7.4 | 105 | 33.0 | 94 |
| 7 | 17.2 | 9.1 | 108 | 41.0 | 94 |
| 8 | 17.4 | 9.1 | 107 | 41.3 | 93 |
| 9 | 17.5 | 8.9 | 109 | 40.8 | 93 |
| 10 | 17.5 | 8.8 | 107 | 40.9 | 93 |

## Patentansprüche

1. Polymerzusammensetzungen enthaltend
I) mindestens ein Pfropfkautschukpolymerisat erhalten durch Emulsionspolymerisation von Styrol und Acrylnitril im Gewichtsverhältnis 95:5 bis 50:50, wobei Styrol und/oder Acrylnitril ganz oder teilweise ersetzt werden kann durch α-Methylstyrol, Methylmethacrylat oder N-Phenylmaleinimid oder Mischungen hieraus, in Gegenwart eines Butadienpolymerisatlatex (A) mit einem mittleren Teilchendurchmesser d₅₀ von 80 bis 220 nm,
II) mindestens ein Pfropfkautschukpolymerisat erhalten durch Emulsionspolymerisation von Styrol und Acrylnitril im Gewichtsverhältnis 95:5 bis 50:50, wobei Styrol und/oder Acrylnitril ganz oder teilweise ersetzt werden kann durch α-Methylstyrol, Methylmethacrylat oder N-Phenylmaleinimid oder Mischungen hieraus, in Gegenwart eines Butadienpolymerisatlatex (B) mit einem mittleren Teilchendurchmesser d₅₀ von 350 bis 650 nm,
III) mindestens ein kautschukfreies Copolymerisat aus Styrol und Acrylnitril im Gewichtsverhältnis 95:5 bis 50:50, wobei Styrol und/oder Acrylnitril ganz oder teilweise durch α-Methylstyrol, Methylmethacrylat oder N-Phenylmaleinimid oder Mischungen hieraus ersetzt werden kann,
**dadurch gekennzeichnet, dass** der Butadienpolymerisatlatex (A) erhalten wird durch Saatpolymerisation unter Verwendung eines Butadienpolymerisat-Saatlatex mit einem mittleren Teilchendurchmesser von 10 bis 100 nm und der Butadienpolymerisatlatex (B) erhalten wird durch Agglomeration unter Verwendung von Butadienpolymerisatlatex (A) als Ausgangslatex.

2. Polymerzusammensetzungen gemäß Anspruch 1, enthaltend
I) mindestens ein Pfropfkautschukpolymerisat erhalten durch Emulsionspolymerisation von Styrol und Acrylnitril im Gewichtsverhältnis 95:5 bis 50:50, wobei Styrol und/oder Acrylnitril ganz oder teilweise ersetzt werden kann durch α-Methylstyrol, Methylmethacrylat oder N-Phenylmaleinimid oder Mischungen hieraus, in Gegenwart eines Butadienpolymerisatlatex (A) mit einem mittleren Teilchendurchmesser d₅₀ von 90 bis 210 nm,
II) mindestens ein Pfropfkautschukpolymerisat erhalten durch Emulsionspolymerisation von Styrol und Acrylnitril im Gewichtsverhältnis 95:5 bis 50:50, wobei Styrol und/oder Acrylnitril ganz oder teilweise ersetzt werden kann durch α-Methylstyrol, Methylmethacrylat oder N-Phenylmaleinimid oder Mischungen hieraus, in Gegenwart eines Butadienpolymerisatlatex (B) mit einem mittleren Teilchendurchmesser d₅₀ von 360 bis 600 nm,
III) mindestens ein kautschukfreies Copolymerisat aus Styrol und Acrylnitril im Gewichtsverhältnis 95:5 bis 50:50, wobei Styrol und/oder Acrylnitril ganz oder teilweise durch α-Methylstyrol, Methylmethacrylat oder N-Phenylmaleinimid oder Mischungen hieraus ersetzt werden kann,
**dadurch gekennzeichnet, dass** der Butadienpolymerisatlatex (A) erhalten wird durch Saatpolymerisation unter Verwendung eines Butadienpolymerisat-Saatlatex mit einem mittleren Teilchendurchmesser von 20 bis 90 nm und der Butadienpolymerisatlatex (B) erhalten wird durch Agglomeration unter Verwendung von Butadienpolymerisatlatex (A) als Ausgangslatex.

3. Polymerzusammensetzungen gemäß Ansprüchen 1 und 2 enthaltend zusätzlich mindestens ein Harz ausgewählt aus aromatischem Polycarbonat, aromatischem Polyestercarbonat, Polyester, Polyamid oder Mischungen daraus.

4. Polymerzusammensetzungen gemäß Ansprüchen 1 bis 3, **dadurch gekennzeichnet, dass** bei der Erzeugung der Pfropfkautschukpolymerisate der Monomerenzulauf derart durchgeführt wird, dass innerhalb der ersten Hälfte der Gesamtmonomerzudosierzeit 55 bis 90 Gew.-% der gesamten bei der Pfropfpolymerisation einzusetzenden Monomeren zudosiert werden und der verbleibende Monomeranteil innerhalb der zweiten Hälfte der Gesamtmonomerzudosierzeit zudosiert wird.

5. Polymerzusammensetzungen gemäß Ansprüchen 1 bis 3, **dadurch gekennzeichnet, dass** bei der Erzeugung der Pfropfkautschukpolymerisate der Temperaturunterschied zwischen Beginn und Ende der Pfropfreaktion mindestens 15°C beträgt.

6. Verfahren zur Herstellung von Polymerzusammensetzungen gemäß Ansprüchen 1 bis 5, wobei der Butadienpolymerisatlatex (A) erhalten wird durch Saatpolymerisation unter Verwendung eines Butadienpolymerisat-Saatlatex mit einem mittleren Teilchendurchmesser von 10 bis 100 nm und der Butadienpolymerisatlatex (B) erhalten wird durch Agglomeration unter Verwendung von Butadienpolymerisatlatex (A) als Ausgangslatex.

7. Verfahren zur Herstellung von Polymerzusammensetzungen gemäß den Ansprüchen 1 bis 6, wobei die Agglomeration zur Herstellung der Butadienpolymerisatlatex (B) unter Verwendung von Essigsäureanhydrid durchgeführt wird.

8. Verfahren zur Herstellung von Polymerzusammensetzungen gemäß Ansprüchen 1 bis 3, **dadurch gekennzeichnet, dass** man die Komponenten I), II) und III) vermischt und bei erhöhter Temperatur compoundiert und extrudiert.

9. Verwendung der Polymerzusammensetzungen gemäß Ansprüchen 1 bis 8 zur Herstellung von Formteilen.

10. Formteile erhältlich aus Polymerzusammensetzungen gemäß Ansprüchen 1 bis 5.

## Claims

1. Polymer compositions containing
I) at least one graft rubber polymer obtained by emulsion polymerization of styrene and acrylonitrile in a weight ratio of from 95:5 to 50:50, it being possible for styrene and/or acrylonitrile to be replaced wholly or partly by α-methylstyrene, methyl methacrylate or N-phenylmaleimide or mixtures thereof, in the presence of a butadiene polymer latex (A) having an average particle diameter d₅₀ of from 80 to 220 nm,
II) at least one graft rubber polymer obtained by emulsion polymerization of styrene and acrylonitrile in a weight ratio of from 95:5 to 50:50, it being possible for styrene and/or acrylonitrile to be replaced wholly or partly by α-methylstyrene, methyl methacrylate or N-phenylmaleimide or mixtures thereof, in the presence of a butadiene polymer latex (B) having an average particle diameter d₅₀ of from 350 to 650 nm,
III) at least one rubber-free copolymer of styrene and acrylonitrile in a weight ratio of from 95:5 to 50:50, it being possible for styrene and/or acrylonitrile to be replaced wholly or partly by α-methylstyrene, methyl methacrylate or N-phenylmaleimide or mixtures thereof,
**characterized in that** the butadiene polymer latex (A) is obtained by seed polymerization using a butadiene polymer seed latex having an average particle diameter of from 10 to 100 nm and the butadiene polymer latex (B) is obtained by agglomeration using butadiene polymer latex (A) as the starting latex.

2. Polymer compositions according to Claim 1, containing
I) at least one graft rubber polymer obtained by emulsion polymerization of styrene and acrylonitrile in a weight ratio of from 95:5 to 50:50, it being possible for styrene and/or acrylonitrile to be replaced wholly or partly by α-methylstyrene, methyl methacrylate or N-phenylmaleimide or mixtures thereof, in the presence of a butadiene polymer latex (A) having an average particle diameter d₅₀ of from 90 to 210 nm,
II) at least one graft rubber polymer obtained by emulsion polymerization of styrene and acrylonitrile in a weight ratio of from 95:5 to 50:50, it being possible for styrene and/or acrylonitrile to be replaced wholly or partly by α-methylstyrene, methyl methacrylate or N-phenylmaleimide or mixtures thereof, in the presence of a butadiene polymer latex (B) having an average particle diameter d₅₀ of from 360 to 600 nm,
III) at least one rubber-free copolymer of styrene and acrylonitrile in a weight ratio of from 95:5 to 50:50, it being possible for styrene and/or acrylonitrile to be replaced wholly or partly by α-methylstyrene, methyl methacrylate or N-phenylmaleimide or mixtures thereof,
**characterized in that** the butadiene polymer latex (A) is obtained by seed polymerization using a butadiene polymer seed latex having an average particle diameter of from 20 to 90 nm and the butadiene polymer latex (B) is obtained by agglomeration using butadiene polymer latex (A) as the starting latex.

3. Polymer compositions according to Claims 1 and 2, additionally containing at least one resin selected from aromatic polycarbonate, aromatic polyester carbonate, polyester, polyamide or mixtures thereof.

4. Polymer compositions according to Claims 1 to 3, **characterized in that** the graft rubber polymers are produced by feeding the monomers in such a manner that from 55 to 90 wt.% of the total monomers used in the graft polymerization are metered in the first half of the total monomer metering time and the remaining amount of monomers is metered in the second half of the total monomer metering time.

5. Polymer compositions according to Claims 1 to 3, **characterized in that** the graft rubber polymers are produced in such a manner that the temperature difference between the beginning and the end of the grafting reaction is at least 15°C.

6. Process for producing polymer compositions according to Claims 1 to 5, wherein the butadiene polymer latex (A) is obtained by seed polymerization using a butadiene polymer seed latex having an average particle diameter of from 10 to 100 nm and the butadiene polymer latex (B) is obtained by agglomeration using butadiene polymer latex (A) as the starting latex.

7. Process for producing polymer compositions according to Claims 1 to 6, wherein the agglomeration for producing the butadiene polymer latex (B) is carried out using acetic anhydride.

8. Process for producing polymer compositions according to Claims 1 to 3, **characterized in that** the components I), II) and III) are mixed and at elevated temperature compounded and extruded.

9. Use of the polymer compositions according to Claims 1 to 8 for producing moulded articles.

10. Moulded articles obtainable from polymer compositions according to Claims 1 to 5.

## Revendications

1. Compositions polymères contenant
I) au moins un polymère de caoutchouc greffé, obtenu par polymérisation en émulsion de styrène et d'acrylonitrile selon un rapport en poids de 95:5 à 50:50, le styrène et/ou l'acrylonitrile pouvant être en totalité ou en partie remplacés par de l'α-méthylstyrène, du méthacrylate de méthyle ou du N-phénylmaléimide ou des mélanges de ceux-ci, en présence d'un latex de polymère de butadiène (A) ayant une granulométrie moyenne d₅₀ de 80 à 220 nm,
II) au moins un polymère de caoutchouc greffé, obtenu par polymérisation en émulsion de styrène et d'acrylonitrile selon un rapport en poids de 95:5 à 50:50, le styrène et/ou l'acrylonitrile pouvant être remplacés en totalité ou en partie par de l'α-méthylstyrène, du méthacrylate de méthyle ou du N-phénylmaléimide ou des mélanges de ceux-ci, en présence d'un latex de polymère de butadiène (B) ayant une granulométrie moyenne d₅₀ de 350 à 650 nm,
III) au moins un copolymère de styrène et d'acrylonitrile selon un rapport en poids de 95:5 à 50:50, sans caoutchouc, le styrène et/ou l'acrylonitrile pouvant être remplacés en totalité ou en partie par de l'α-méthylstyrène, du méthacrylate de méthyle ou du N-phénylmaléimide ou des mélanges de ceux-ci,
**caractérisées en ce que** le latex de polymère de butadiène (A) est obtenu par polymérisation par germination par utilisation d'un latex germe de polymère de butadiène ayant une granulométrie moyenne de 10 à 100 nm, et que le latex de polymère de butadiène (B) est obtenu par agglomération par utilisation, en tant que latex de départ, du latex de polymère de butadiène (A).

2. Compositions polymères selon la revendication 1, contenant :
I) au moins un polymère de caoutchouc greffé, obtenu par polymérisation en émulsion de styrène et d'acrylonitrile selon un rapport en poids de 95:5 à 50:50, le styrène et/ou l'acrylonitrile pouvant être en totalité ou en partie remplacés par de l'α-méthylstyrène, du méthacrylate de méthyle ou du N-phénylmaléimide ou des mélanges de ceux-ci, en présence d'un latex de polymère de butadiène (A) ayant une granulométrie moyenne d₅₀ de 90 à 210 nm,
II) au moins un polymère de caoutchouc greffé, obtenu par polymérisation en émulsion de styrène et d'acrylonitrile selon un rapport en poids de 95:5 à 50:50, le styrène et/ou l'acrylonitrile pouvant être remplacés en totalité ou en partie par de l'α-méthylstyrène, du méthacrylate de méthyle ou du N-phénylmaléimide ou des mélanges de ceux-ci, en présence d'un latex de polymère de butadiène (B) ayant une granulométrie moyenne d₅₀ de 360 à 600 nm,
III) au moins un copolymère de styrène et d'acrylonitrile selon un rapport en poids de 95:5 à 50:50, sans caoutchouc, le styrène et/ou l'acrylonitrile pouvant être remplacés en totalité ou en partie par de l'α-méthylstyrène, du méthacrylate de méthyle ou du N-phénylmaléimide ou des mélanges de ceux-ci,
**caractérisées en ce que** le latex de polymère de butadiène (A) est obtenu par polymérisation par germination par utilisation d'un latex germe de polymère de butadiène ayant une granulométrie moyenne de 20 à 90 nm, et que le latex de polymère de butadiène (B) est obtenu par agglomération par utilisation, en tant que latex de départ, du latex de polymère de butadiène (A).

3. Compositions polymères selon les revendications 1 et 2, contenant en outre au moins une résine choisie parmi les polycarbonates aromatiques, les polyester-carbonates aromatiques, les polyesters, les polyamides ou leurs mélanges.

4. Compositions polymères selon les revendications 1 à 3, **caractérisées en ce que**, lors de la production des polymères de caoutchouc greffés, on procède à l'amenée des monomères de telle sorte que, au cours de la première moitié du temps de dosage des monomères totaux, on introduise 55 à 90 % en poids de la totalité des monomères devant être utilisés lors de la polymérisation par greffage, la partie restante des monomères étant introduite au cours de la deuxième moitié du temps de dosage des monomères totaux.

5. Compositions polymères selon les revendications 1 à 3, **caractérisées en ce que**, lors de la production des polymères de caoutchouc greffés, la différence de température entre le début et la fin de la réaction de greffage est d'au moins 15°C.

6. Procédé de préparation de compositions polymères selon les revendications 1 à 5, dans lequel le latex de polymère de butadiène (A) est obtenu par polymérisation par germination, par utilisation d'un latex germe de polymère de butadiène ayant une granulométrie moyenne de 10 à 100 nm, le latex de polymère de butadiène (B) étant obtenu par agglomération, par utilisation du latex de polymère de butadiène (A) en tant que latex de départ.

7. Procédé de préparation de compositions polymères selon les revendications 1 à 6, dans lequel l'agglomération destinée à préparer le latex de polymère de butadiène (B) est mise en oeuvre par utilisation d'anhydride acétique.

8. Procédé de préparation de compositions polymères selon les revendications 1 à 3, **caractérisé en ce qu'**on mélange les composants I), II) et III), et on les formule et extrude à haute température.

9. Utilisation des compositions polymères selon les revendications 1 à 8 pour fabriquer des objets moulés.

10. Objets moulés pouvant être obtenus à partir de compositions polymères selon les revendications 1 à 5.
